Europäisches Patentamt

European Patent Office

Office européen des brevets

(19)

(11) Numéro de publication: **0 175 653**
A2

(12) # DEMANDE DE BREVET EUROPEEN

(21) Numéro de dépôt: **85830016.3**

(51) Int. Cl.⁴: **F 02 M 37/22**, F 02 M 31/12

(22) Date de dépôt: **25.01.85**

(30) Priorité: **31.01.84 IT 5292984 U**

(71) Demandeur: **Scarpa, Pierluisa, Via Novara 23, I-28071.Borgolavezzaro (NO) (IT)**

(43) Date de publication de la demande: **26.03.86 Bulletin 86/13**

(84) Etats contractants désignés: **AT BE CH DE FR GB LI LU NL SE**

(72) Inventeur: **Scarpa, Pierluisa, Via Novara 23, I-28071 Borgolavezzaro (NO) (IT)**

(54) **Dispositif chauffant applicable à un filtre de carburant.**

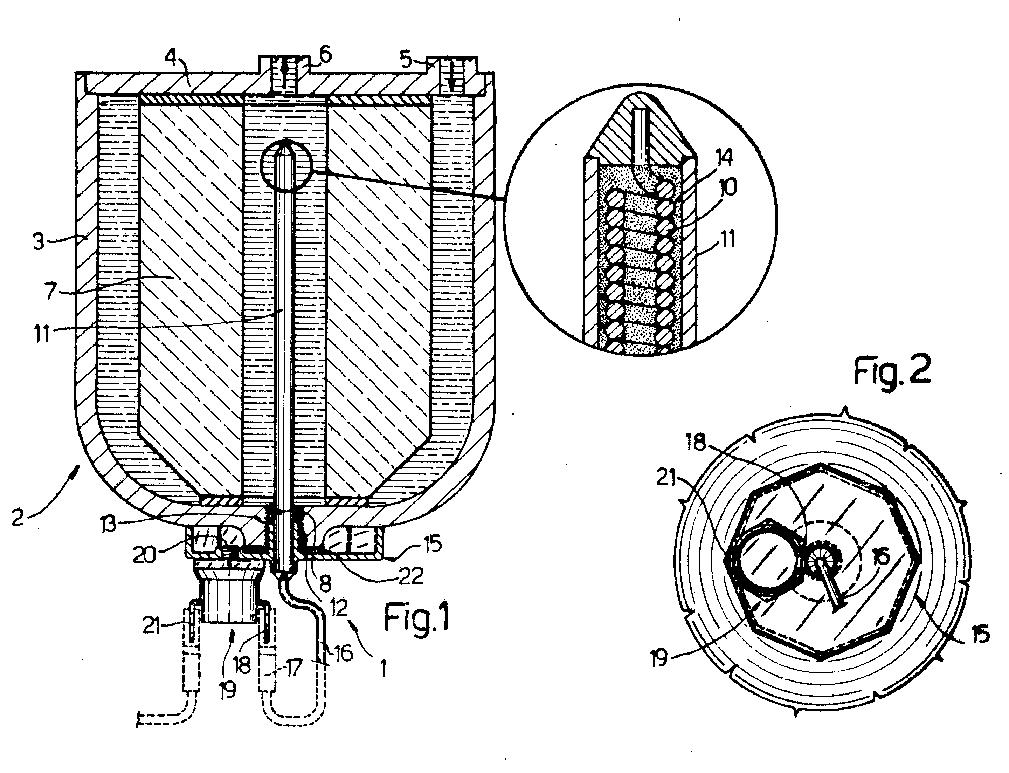

(57) Dispositif chauffant (1) présentant au moins une résistance (10) pouvant être introduite à l'intérieur d'un filtre (2) dans lequel, pendant l'usage, s'écoule le carburant. La résistance (10) est supportée par un corps (12) muni de moyens (13) de couplage capables d'établir un accouplement mécanique et étanche avec un trou de passage (8) du filtre (2) à travers lequel la résistance (10) est introduite dans le filtre même (2) (Figure 1).

EP 0 175 653 A2

0175653

La présente innovation est relative à un dispositif chauffant applicable à un filtre de carburant

Comme on le sait, le carburant utilisé dans les moteurs Diesel contient aussi de la paraffine en petites doses. Cette substance présente l'inconvénient de se solidifier à basses températures, notamment celles inférieures à $0^o$ C, favorisant par là l'encrassement soit des conduits d'alimentation au carburant, soit des filtres principaux ou secondaires prévus dans tout système d'alimentation d'un moteur Diesel.

On connait actuellement des dispositifs chauffants pouvant être appliqués à des filtres de carburant de façon à permettre le chauffage du carburant lui-même. En particulier, ces dispositifs sont essentiellement constitués d'une résistance déformable contenue à l'intérieur d'une bande isolante, cette dernière aussi réalisée en matériau déformable, et pouvant être enroulée sur le corps extérieur du filtre. L'alimentation de courant électrique à la résistance provoque le chauffage de la résistance elle-même et, à travers la bande et le corps du filtre, permet le chauffage du combustible contenu à l'intérieur du filtre même et, par conséquent, la fonte des cristaux de paraffine. Les dispositifs de type spécifié ci-dessus, tout en permettant de palier à l'inconvénient lié à la cristallisation de la paraffine, présentent une forte dispersion d'énergie thermique produite par la résistance, le rapport entre l'énergie électrique fournie à la résistance et l'énergie thermique reçue par le carburant étant donc trop élevé.

Le but de la présente innovation consiste à réaliser un dispositif permettant de chauffer le combustible contenu dans le filtre d'un moteur Diesel et qui, comparé aux dispositifs de type connu et ci-dessus spécifié, présente un rendement de transmission d'énergie nettement supérieur.

Ce but est atteint avec la présente innovation, étant donné que celle-ci se rapporte à un dispositif chauffant pouvant être appliqué à un filtre de carburant pour transmettre l'énergie thermique audit carburant, le filtre en question présentant un corps extérieur muni d'un trou de passage au moins,

caractérisé par le fait qu'il comprend :

au moins une résistance électrique pouvant être introduite à l'intérieur dudit filtre à travers ledit trou de passage ; et

un corps supportant cette résistance et muni de moyens d'accouplement pouvant engager le trou de passage en question,afin d'établir un accouplement mécanique et étanche avec le corps correspondant dudit filtre .

Pour une meilleure compréhension de cette innovation, nous décrirons
ici un type de réalisation  préféré, à simple titre d'exemple non
limitatif, et basé sur le dessin ci-joint, dans lequel :

la figure 1 est une vue en élévation et en section partielle
d'un dispositif chauffant réalisé  suivant la présente innovation
et appliqué à un filtre de carburant ; et

la figure 2 est une vue d'en bas et dans laquelle certaines
parties ont été ôtées pour rendre plus clair le dispositif indiqué
sur la figure 1.

En se référant notamment à la figure 1, on indique dans son ensemble
par 1 un dispositif chauffant réalisé suivant la présente innovation
et pouvant être appliqué  à un filtre 2 pour transmettre l'énergie
thermique au combustible qui ,pendant l'usage,s'écoule  à l'intérieur
du filtre 2 lui-même.Ce dernier est schématisé sur la figure 1 à
simple titre d'exemple non limitatif et présente en particulier un
corps en coupe 3, fermé sur le dessus  par un couvercle 4, duquel
partent 5 tubes d'entrée et 6 tubes de sortie du combustible. Le
corps en coupe 3 reçoit à l'intérieur un élément filtrant 7  et

0175653

.présente, sur sa paroi de fond, un trou de passage fileté (8) qui, durant l'usage, est généralement fermé par un bouchon fileté correspondant (n'est pas indiqué sur la figure) et dont le but est de permettre la purge de l'eau s'accumulant à l'intérieur du filtre (2) lui même.

Suivant la présente innovation, le dispositif chauffant 1 comprend essentiellement une résistance 10, enfermée à l'intérieur d'un tube 11 ayant une extrêmité fermée et raccordée à l'une des bornes de la résistance 10, et une extrêmité opposée qui est fixée, de préférence soudée, à un élément de support 12, de forme cylindrique et avec un filetage 13 engageant de façon étanche le filetage correspondant présenté par le trou de passage 8 du corps 3 du filtre cité ci-dessus. Plus particulièrement, la résistance 10 est de type à fil et est enroulée en hélice de façon ·à présenter un déroulement comme celui d'un ressort cylindrique ; l'isolement entre la résistance 10 et le tube 11 est obtenu au moyen d'une poudre 14, essentiellement constituée d'oxyde de magnésium, introduite et pressée à l'intérieur du tube 11 lui-même. L'élément 12 est relié à un corps en coupe 15 dont les parois latérales forment en plan un octogone de type régulier. Du corps en coupe 15 sort un câble électrique isolé 16 lequel, d'une façon qui n'apparaît pas sur la figure, est relié à la borne non visible de la résistance 10. Le câble 16 est également relié, au moyen d'un connecteur 17, à une borne respective 18 d'un interrupteur thermique 19 (par exemple un interrupteur bi-métallique). L'interrupteur thermique 19 a une queue filetée 20, vissée dans la paroi de fond du corps en coupe 15, et présente en outre une seconde borne 21 qui, pendant le fonctionnement, est reliée à une source appropriée d'alimentation comme par exemple un pôle positif de la batterie d'accumulateurs du moteur (convenablement mise sous clef).

Le dispositif fonctionne de façon extrêmement simple et intuitive.

En effet, en ce qui concerne le montage, il suffit de dévisser dans le filtre 2 le bouchon correspondant de purge, et de le remplacer

avec le dispositif 1,en vissant particulièrement l'élément 12 à l'intérieur du trou 8, jusqu'à ce qu'une rondelle 22 en matériau élastique soit comprimée entre le paroi de fond du corps en coupe 15 et la surface correspondante présentée par le corps en coupe 3 du filtre 2.

Le corps en coupe 15 et l'élément 12 ont, durant le fonctionnement, une température de peu inférieure et de toutes façons très proche de celle du carburant contenu dans le filtre 2 cité, ces éléments étant en effet de préférence réalisés avec un matériau de type métallique et donc bon conducteur de chaleur. En réglant le seuil d'ouverture et de fermeture de l'interrupteur thermique 19, par exemple en provoquant la fermeture du contact quand la température descend au-dessous

de 40° C,et en n'en provoquant l'ouverture quand la température monte par exemple au-dessus de 50° C, il est évident que la résistance 10 est alimentée électriquement et que, par conséquent, elle cède de la chaleur au carburant contenu dans le filtre 2, de façon à éviter que ne se produise l'effet indésirable de la cristallisation de la paraffine.

De l'examen des caractéristiques du dispositif chauffant 1 ,réalisé suivant les détails de la présente innovation, il apparait que les inconvénients cités ci-dessus sont amplement surmontés. En particulier le dispositif 1 est extrêmement facile à monter, il s'adapte pratiquement à n'importe quel type de filtre et, surtout, il présente dans son ensemble un rendement élevé du point de vue de la conversion d'énergie électrique demandée par la résistance 10 en énergie thermique reçue par le carburant s'écoulant dans le filtre 2.

Il apparaît enfin clairement que l'on peut apporter des modifications et des variantes au dispositif 1 décrit ci-dessus, sans sortir de la présente innovation. Par exemple, d'amples variantes sont admises dans la structure du dispositif 1 : on pourrait éliminer l'interrupteur thermique 19, le corps en coupe 15 ou bien on pourrait utiliser un type différent de résistance qui pourrait également ne pas avoir besoin du tube de protection 11. Enfin, le trou à travers lequel est introduite la résistance 10 de chauffage n'est pas nécessairement celui qu'occupe normalement le bouchon de purge, mais ce pourrait être n'importe quel autre trou, par exemple le trou de sortie aussi, déjà prévu ou à prévoir également dans le filtre 2.

0175653

R E V E N D I C A T I O N S

1. - Dispositif chauffant pouvant être appliqué à un filtre 2 du carburant, pour transmettre l'énergie thermique audit carburant, ce filtre 2 comprenant un corps extérieur 3 muni d'un trou, de passage 8 au moins.

caractérisé par le fait qu'il comprend :

au moins une résistance électrique 10 pouvant être introduite à l'intérieur du filtre en question 2, à travers ledit trou de passage 8 ; et

un corps 12 supportant ladite résistance 10, et muni de moyens d'accouplement 11 pouvant engager ledit trou de passage 8 , afin d'établir un raccord mécanique et étanche avec le corps correspondant dudit filtre 2.

2.- Dispositif selon la revendication 1, caractérisé par le fait que ladite résistance 10 s'étend essentiellement dans une seule direction par rapport audit corps de support 12.

3.- Dispositif selon la revendication 1 ou 2, caractérisé par le fait qu'il comprend un corps-câble 11 de protection fixé audit corps 12, et pouvant recevoir ladite résistance 10 .

4.- Dispositif selon la revendication 3, caractérisé par le fait qu'il comprend un milieu isolant 14 pouvant isoler électriquement ladite résistance 10 dudit câble de protection 11.

5. Dispositif selon la revendication 4, caractérisé par le fait que ledit milieu isolant est essentiellement constitué par de la poudre pressée d'oxyde de magnésium .

6. Dispositif selon l'une quelconque des revendications de 3 à 5, caractérisé par le fait que ledit corps-câble est constitué d'un tube 11, fermé à une extrêmité et relié à l'extrêmité opposée audit corps de support 12.

7. Dispositif selon la revendication 6, caractérisé par le fait que ledit tube 11 est réalisé avec un matériau électriquement conducteur et qu'il a une extrêmité reliée à une borne de ladite résistance 10.

8.- Dispositif selon l'une quelconque des revendications précédentes, caractérisé par le fait que ladite résistance 10 est de type à fil.

9. Dispositif selon la revendication 8, caractérisé par le fait que ladite résistance 10 à fil est enroulée en hélice et présente dans l'ensemble une structure à ressort cylindrique.

10.- Dispositif selon l'une quelconque des revendications précédentes, caractérisé par le fait que ledit corps de support de ladite résistance 10 a une structure essentiellment cylindrique, et que lesdits moyens d'accouplement sont essentiellement constitués par un filetage 11 obtenu dans ledit corps 12, et pouvant engager de façon étanche le filetage correspondant présenté par ledit trou de passage 8 , pratiqué dans ledit filtre 2.

11.- Dispositif selon l'une quelconque des revendication précédentes, caractérisé par le fait qu'il comprend des moyens sensibles à la température, raccordés de façon solidaire audit corps 12.

12.- Dispositif selon la revendicazion 11, caractérisé par le fait que lesdits moyens sensibles à la température sont essentiellement constitués par l'interrupteur thermique relié en série à ladite résistance 10.

13.- Dispositif selon la revendication 12, caractérisé par le fait que ledit interrupteur thermique 19 est de type bi-métallique.

14. Dispositif selon l'une quelconque des revendications de 11 à 13, caractérisé par le fait que lesdits moyens sensibles à la température 19 sont supportés par un élément 15 solidaire dudit corps 12.

15.- Dispositif selon la revendication 14, caractérisé par le fait que ledit élément 15 est essentiellement en coupe.

16.- Dispositif selon la revendication 15, caractérisé par le fait que les parois latérales dudit corps en coupe 15 ont en plan une conformation de type polygonal.

17.- Dispositif chauffant essentiellement comme décrit et suivant dessin ci-joint.

Fig.1

Fig.2